# EUROPEAN PATENT APPLICATION

(11) **EP 2 515 095 A1**
(43) Date of publication of application: **24.10.2012**
(21) Application number: 10837411.7
(22) Date of filing: 22.11.2010
(51) Int. Cl.: G01N 1/22, G01N 1/00

(54) **EXHAUST GAS SAMPLING DEVICE**

(30) Priority: 17.12.2009 JP 2009286905
(71) Applicant: HORIBA, Ltd., Minami-ku Kyoto-shi Kyoto 601-8510 (JP)
(72) Inventor: TAKAHASHI, Yasushi, Kyoto-city Kyoto 601-8510 (JP)
(74) Representative: Müller - Hoffmann & Partner
(86) International application number: PCT/JP2010/070792
(87) International publication number: WO 2011/074382

(57) **Abstract**

The present invention is intended to make it possible to set a dilution rate of a sample gas without being restricted by flow compensation ranges of first and second flowmeters and particularly make it possible to dilute the sample gas at a low dilution rate, and is provided with a downstream-side dilution tunnel 3 in which a part of exhaust gas flowing through an exhaust pipe is introduced as sample gas into a mixing part 31, a dilution gas flow path 4 which is connected to an upstream side of the downstream-side dilution tunnel 3 and includes the first flowmeter FM1, a diluted sample gas flow path 5 which is connected to the downstream side of the downstream-side dilution tunnel 3 and includes the second flowmeter FM2, and a dilution gas discharge flow path 6 which is connected to an upstream side of the mixing part 31 in the downstream-side dilution tunnel 3 and includes a third flowmeter FM3.

## Description

### Technical Field

The present invention relates to an exhaust gas sampling device to be used in measuring PM (Particulate Matter such as soot) contained in exhaust gas for quantitatively analyzing the PM discharged from such as a diesel engine mounted on a vehicle.

### Background Art

As a conventional exhaust gas sampling device, as disclosed in Patent Literature 1, it is configured that a dilution air flow path is connected to an upstream side of a dilution tunnel into which a part of exhaust gas is introduced as a sample gas, wherein the dilution air flow path is provided with a first flowmeter adapted to measure a flow rate (Q_{A}) of dilution air for diluting the introduced exhaust gas. Also, a measurement flow path is connected to an downstream side of the dilution tunnel, wherein the measurement flow path is provided with a filter for collecting PM contained in the diluted exhaust gas and a second flowmeter adapted to measure a flow rate (Q_{B}) of the diluted exhaust gas passing through the filter. And it is intended to calculate a flow rate of the sample gas introduced in the dilution tunnel from a difference (Q_{B}-Q_{A}) between the measurement result (Q_{A}) of the first flowmeter and the measurement result (Q_{B}) of the second flowmeter. By this arrangement, a dilution rate of the exhaust gas is obtained as Q_{B} / (Q_{B}-Q_{A}).

However, in the configuration of determining the flow rate of a sample gas introduced to the dilution tunnel using the first flowmeter and the second flowmeter, the dilution rate of the exhaust gas is restricted by measurement ranges of the first and second flowmeters so that it is difficult to obtain a desired dilution rate with accuracy in some cases.

As mentioned above, since the flow rate of a sample gas is determined based on a difference between the measurement results of the first and second flowmeters, it is necessary to calibrate both of the first and second flowmeters in the same range. And in these flowmeters, a range (flow compensation range) available with accuracy with respect to a full-scale is predetermined, and in the case of, e.g., a Venturi type flowmeter, the flow compensation range thereof is approximately 50% of the full-scale. That is, in the case where the first and second flowmeters are respectively used in the flow compensation ranges thereof, the minimum value of the dilution rate of the exhaust gas is limited to a double, and therefore there is a problem that dilution ratio cannot be accurately performed at equal to or less than 2 times.

### Citation List

### Patent Literature

Patent Literature 1: JPA Heisei 11-326161

### Summary of Invention

### Technical Problem

Therefore, the present invention has been made in order to collectively solve the above problems, and an essential object thereof is to make it possible to set a dilution rate of a sample gas without being restricted by flow compensation ranges of a first flowmeter provided on an upstream side and a second flowmeter provided on a downstream side of a dilution tunnel and, in particular, to make it possible to dilute the sample gas at a low dilution rate.

### Solution to Problem

That is, an exhaust gas sampling device according to the present invention includes:
a downstream-side dilution tunnel in which a part of exhaust gas flowing through an exhaust pipe or a part of diluted exhaust gas flowing through an upstream-side dilution tunnel is introduced as sample gas into a mixing part;
a dilution gas flow path connected to an upstream side of the downstream-side dilution tunnel so as to supply dilution gas to the downstream-side dilution tunnel, the dilution gas flow path including a first flowmeter for measuring a flow rate of the dilution gas;
a diluted sample gas flow path connected to the downstream side of the downstream-side dilution tunnel, the diluted sample gas flow path including a second flowmeter for measuring a flow rate of the diluted sample gas diluted with the dilution gas; and
a dilution gas discharge flow path connected to an upstream side of the mixing part in the downstream-side dilution tunnel so as to discharge a part of the dilution gas in the downstream-side dilution tunnel to outside, the dilution gas discharge flow path including a third flowmeter for measuring a flow rate of the dilution gas to be discharged.

With this configuration, since not only the first flowmeter and second flowmeter but also the dilution gas discharge flow path including the third flowmeter on the upstream side of the mixing part is provided, a degree of freedom of setting a flow rate of the sample gas can be increased so that the dilution rate of the sample gas can be set without being restricted by the flow compensation range. In particular, whereas accurate dilution cannot be performed in a region of a low dilution rate due to restriction in the flow compensation ranges of the first and second flowmeters at a conventional dilution rate of the sample gas, a sample gas can be accurately diluted at a low dilution rate by providing the dilution gas discharge flow path having the third flowmeter.

For example, in the case where the flowmeter is a Venturi type flowmeter, the flow compensation range thereof is approximately 50% of the full-scale. If so, the dilution of the sample gas using only the first and second flowmeters as in the conventional case is limited than 2 times, and therefore accurate dilution cannot be performed under 2 times dilution rate. On the other hand, by providing the dilution gas discharge flow path having the third flowmeter on the upstream side of the mixing part of the dilution tunnel, even in the case of using the first and second flowmeters in the flow compensation ranges thereof, the dilution gas introduced into the dilution tunnel is discharged to the outside so that the flow rate of the dilution gas to be mixed with the sample gas can be thereby reduced, and thus the low dilution rate of the sample gas can be accurately performed.

In the conventional exhaust gas sampling device using only the first and second flowmeters, it is necessary to calibrate at respective points in the range where the flow rate of the sample gas is varied. That is, in order to accurately obtain a flow rate difference (Q_{B}-Q_{A}) between the measurement result (Q_{A}) of the first flowmeter and the measurement result (Q_{B}) of the second flowmeter, it is necessary to calibrate respective absolute values of the first and second flowmeters. Further, in a configuration of calculating the sample gas flow rate by the flow rate difference (Q_{B}-Q_{A}) between the measurement result (Q_{A}) of the first flowmeter and the measurement result (Q_{B}) of the second flowmeter, there is a problem that the sampling accuracy of a measurement target gas is deteriorated because of such as occurrence of a gas leakage in a line (flow path) between the first and second flowmeters in each sample gas flow rate.

In order to solve these problems, it is preferable that the dilution gas flow rate obtained by the first flowmeter is made identical to the diluted sample gas flow rate obtained by the second flowmeter so that the sample gas flow rate to be introduced to the downstream-side dilution tunnel is controlled by the dilution gas flow rate obtained by the third flowmeter.

With this configuration, since the sample gas flow rate is determined by the third flowmeter irrespective of the first and second flowmeters, the sample gas flow rate can be easily obtained so that an error in sampling accuracy due to line factors in each point of the flow rates of the flowmeters can be reduced. Moreover, referring to the calibration, since the flow rates of the first and second flowmeters are made identical, it is only needed to calibrate an absolute value of only one point of any one of the first and second flowmeters (preferably the first flowmeter in the dilution air side), and therefore the calibration work can be remarkably facilitated and a working time can be also reduced. In addition, as to the calibration of the other flowmeter, since it is only needed to calibrate only one point using the flowmeter subjected to the calibration of an absolute value of one point while being incorporated on the line, it is not necessary to perform the calibration in a plurality of flow rate values so that the calibration work can be remarkably facilitated and a working time can be also reduced.

In order to apply the invention mentioned above to a second tunnel system in the overall flow dilution tunnel so as to reduce an influence of an flow rate error on the other sampling lines for measuring an exhaust gas component, it is preferable that, the downstream-side dilution tunnel is configured such that the diluted exhaust gas flowing through the upstream-side dilution tunnel is introduced into the mixing part as the sample gas, and the upstream-side dilution tunnel is configured such that the exhaust gas and the dilution gas are introduced in the upstream side thereof and the downstream side thereof is connected with a constant flow regulating device including such as a venturi and a pump for regulating the flow rate of the diluted exhaust gas to be constant, and the dilution gas discharge flow path is connected to an upstream side of the constant flow regulating device.

### Advantageous Effects of Invention

According to the present invention configured as described above, it becomes possible to set the dilution rate of the sample gas without being restricted by the flow compensation ranges of the first flowmeter provided on the upstream side of the dilution tunnel and the second flowmeter provided on the downstream side and, in particular, it becomes possible to dilute the sample gas at a low dilution rate.

### Brief Description of Drawings

[Fig. 1] Fig. 1 is a schematic diagram showing a configuration of an exhaust gas sampling device according to one embodiment of the present invention.
[Fig. 2] Fig. 2 is a schematic diagram showing a configuration of an exhaust gas sampling device according to a modified embodiment. Reference Signs List

### Description of Reference Numerals

- 100: ... Exhaust gas sampling device
- E1: ... Exhaust pipe
- 3: ... Downstream-side dilution tunnel (dilution tunnel)
- 31: ... Mixing p art
- 4: ... Dilution gas flow path
- FM1: ... First flowmeter
- 5: ... Diluted sample gas flow path
- F1, F2: ... Filter
- FM2: ... Second flowmeter
- 6: ... Gas discharge flow path
- FM3: ... Third flowmeter
- 3a: ... Upstream-side dilution tunnel
- 8: ... Constant flow regulating device

### Description of Embodiments

The following describes one embodiment of an exhaust gas sampling device according to the present invention referring to drawings.

The exhaust gas sampling device 100 according to the present embodiment is micro-tunnel typed one that divides and collects (sampling) exhaust gas from an exhaust pipe E1 linked to such as a diesel engine E mounted on, e.g., a car so that the exhaust gas is diluted to collect PM contained therein.

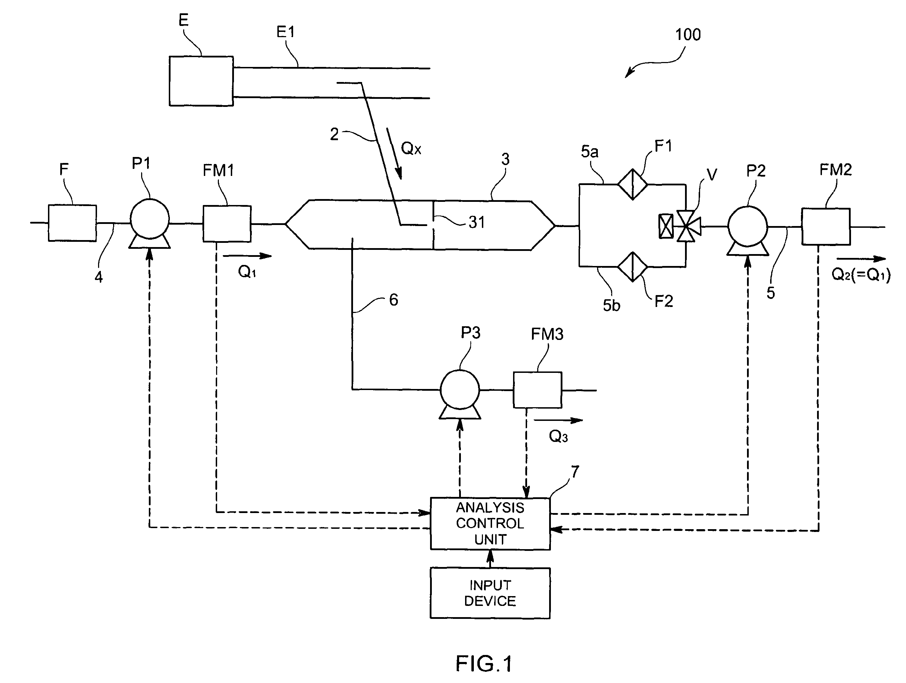

Specifically, as shown in Fig. 1, this device includes: a sampling pipe 2 inserted and connected to an exhaust pipe E1 for sampling a part of the exhaust gas as a sample gas flowing through the exhaust pipe E1; a downstream-side dilution tunnel (referred to as "dilution tunnel" hereinafter in the present embodiment) 3 into which the exhaust gas (sample gas) sampled through the corresponding sampling pipe 2 is introduced so as to be diluted by mixture in a mixing part 31 such as, an orifice; a dilution air flow path 4 connected to an upstream side of the dilution tunnel 3 so as to supply dilution air for diluting the sampled exhaust gas into the dilution tunnel 3; a diluted sample gas flow path 5 connected to a downstream side of the dilution tunnel 3 so that the diluted sample gas diluted with the dilution air flows through the diluted sample gas flow path 5; and an air discharge flow path 6 connected to the upstream side of the mixing part 31 in the dilution tunnel 3 so as to discharge a part of the dilution air in the dilution tunnel 3 to the outside.

The sampling pipe 2 has one opening end located in the exhaust pipe E1 and the other opening end located in the vicinity of the upstream side of the mixing part 31 (i.e., in the vicinity of the orifice) in the dilution tunnel 3.

On the dilution air flow path 4, there are serially provided: a filter F for taking in air from the upstream side thereof and removing foreign matter such as dusts contained therein; a first suction pump P1 such as, a roots blower pump; and a first flowmeter FM1 (such as a venturi type flowmeter or an orifice type flowmeter) such as, a differential flowmeter for measuring a flow rate of the dilution air, in this order.

The downstream side of the diluted sample gas flow path 5 is shunted to two flow paths and the shunts 5a and 5b are respectively provided with filters F1 and F2 for collecting PM contained in the diluted sample gas. And the shunt 5a on one had is a flow path for flowing the diluted sample gas when measuring the PM and the other shunt 5b is a flow path for flowing the diluted sample gas when not measuring the PM. A three-way solenoid valve V acting as flow path switching means is provided at a confluence of the shunts 5a and 5b so as to be capable of switching each of the shunts 5a and 5b. Also, on the downstream side of the confluence of the diluted exhaust gas flow path 5, there are serially provided a second suction pump P2 such as, a roots blower pump and a second flowmeter FM2 (such as a venturi type flowmeter or an orifice type flowmeter) such as, a differential flowmeter for measuring the flow rate of the diluted sample gas, in this order from the upstream side thereof. In addition, the downstream side is, for example, released to the atmosphere.

On the air discharge flow path 6, there are serially provide a third suction pump P3 such as, a roots blower pump; and a third flowmeter FM3 (such as a venturi type flowmeter or an orifice type flowmeter) such as, a differential flowmeter for measuring a flow rate of the dilution air to be discharged, in this order from the upstream side thereof. In addition, the downstream side is, for example, released to the atmosphere. Further, the respective flowmeters FM1 to FM3 mentioned above may have an identical measurement range and may have respectively different measurement ranges. However, from a viewpoint of commonality of parts, it may be preferable to use the respective flowmeters FM1 to FM3 having the same measurement ranges.

Moreover, the exhaust gas sampling device 100 of the present embodiment includes an analysis control unit 7 for controlling the suction pumps P1 to P3 provided on the respective flow paths 4 to 6 and the three-way solenoid valve V. This analysis control unit 7 is a general-purpose or dedicated so-called computer that includes such as a CPU, a memory, input means and a display so that the CPU and peripheral equipment thereof are operated in cooperation in accordance with a prescribed program stored in the memory.

Specifically, the analysis control unit 7 acquires an output signal from the first flowmeter FM1 so as to control the first suction pump P1, acquires an output signal from the second flowmeter FM2 so as to control the second suction pump P2 and acquires an output signal from the third flowmeter FM3 so as to control the third suction pump P3.

Thus, the analysis control unit 7 of the present embodiment makes the dilution air flow rate (Q₁) obtained by the first flowmeter FM1 identical to the diluted sample gas flow rate (Q₂) obtained by the second flowmeter FM2 and controls the sample gas flow rate (Qₓ) to be introduced into the dilution tunnel 3 through the sampling gas pipe 2 based on the discharged air flow rate (Q₃) obtained by the third flowmeter FM3.

More specifically, the analysis control unit 7 controls the first suction pump P1 and second suction pump P2 so that the dilution air flow rate (Q₁) obtained by the first flowmeter FM1 and the diluted sample gas flow rate (Q₂) obtained by the second flowmeter FM2 are made identical. Under this condition, the analysis control unit 7 further control the third suction pump P3 so that the discharged air flow rate (Q₃) obtained by the third flowmeter FM3 becomes a prescribed value. Thus, by making the dilution air flow rate (Q₁) obtained by the first flowmeter FM1 identical to the diluted sample gas flow rate (Q₂) obtained by the second flowmeter FM2, the discharged air flow rate (Q₃) obtained by the third flowmeter FM3 becomes the exhaust gas sampling flow rate (Qₓ). Consequently, the sampling flow rate can be directly obtained based on the measurement result of the third flowmeter FM3 without calculating the sampling flow rate based on a difference between the measurement results of the first flowmeter FM1 and the second flowmeter FM2 as conventionally performed. That is, the analysis control unit 7 acquires the output signal from the third flowmeter FM3 and utilizes the discharged air flow rate (Q₃) obtained by the third flowmeter FM3 as the exhaust gas sampling flow rate (Qₓ), i.e., (Qₓ = Q₃) in the calculations thereafter. Herein, by receiving an input from an input device, the analysis control unit 7 can set a desired sampling flow rate (Qₓ) and perform the control.

### <Effect of the Present Embodiment>

According to the exhaust gas sampling device 100 according to the present embodiment configured as described above, since the sample gas flow rate (Qₓ) is determined only by the third flowmeter FM3 irrespective of the first and second flowmeters FM1 and FM2, the sample gas flow rate (Qₓ) can be easily obtained so that an error in sampling accuracy due to line factors in each point of the flow rates of the flowmeters FM1 and FM2 can be reduced.

Moreover, referring to the calibration, since the flow rates of the first and second flowmeters FM1 and FM2 are made identical, it is only needed to calibrate an absolute value of only one point of any one of the first and second flowmeters FM1 and FM2 (preferably the second flowmeter FM2), and therefore the calibration work can be remarkably facilitated and a working time can be also reduced. In addition, as to the calibration of the other flowmeter FM1, since it is only needed to calibrate only one point using the flowmeter FM2 subjected to the calibration of an absolute value of one point while being incorporated on the line, it is not necessary to perform the calibration in a plurality of flow rate values so that the calibration work can be remarkably facilitated and a working time can be also reduced.

Furthermore, since the air discharge flow path 6 is connected to the upstream side of the mixing part 31 so that the dilution air in the upstream side of the mixing part 31 discharged to the outside, it is not necessary to provide a valve or a flowmeter in the sample gas flow path 2 or in the upstream of the filters F1 and F2 in the diluted sample gas flow path 5 so that an measurement error of the PM can be prevented.

It is noted that the present invention is not limited to the embodiment described above. For example, although the flow rate of the first flowmeter and the flow rate of the second flowmeter are made identical in the embodiment mentioned above, these flow rates may be different from each other. That is, the flow rate of the second flowmeter may be set larger than that of the first flowmeter. In this case, the sampling flow rate (Qₓ) becomes Q₂ - (Q₁ - Q₃) from the flow rate (Q₁) of the first flowmeter, the flow rate (Q₂) of the second flowmeter and the flow rate (Q₃) of the third flowmeter. With this configuration, the degree of freedom of setting the flow rate of the sample gas can be increased so that the dilution rate of the sample gas can be set without being restricted the flow compensation range. In particular, whereas accurate dilution cannot be performed in a region of a low dilution rate due to restriction in the flow compensation ranges of the first and second flowmeters at a conventional dilution rate of the sample gas, a sample gas can be accurately diluted at a low dilution rate by providing the air discharge flow path having the third flowmeter.

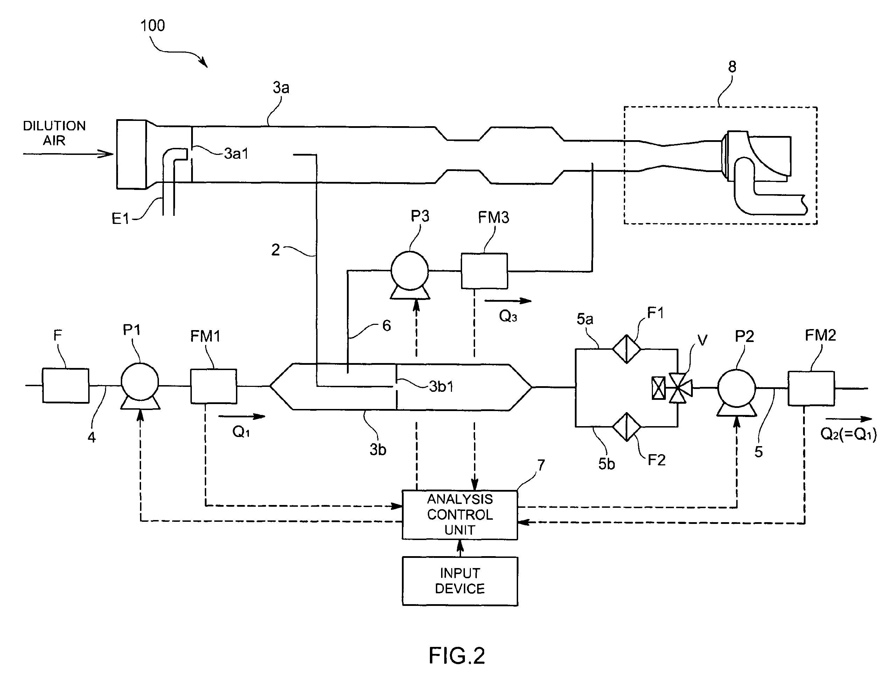

In addition, although the exhaust gas sampling device of the above embodiment is micro-tunnel type one, it may be also adapted to a second tunnel type. As shown in Fig. 2, this exhaust gas sampling device 100 includes: an upstream-side dilution tunnel 3a into which exhaust gas is introduced from an exhaust pipe E1 and dilution air is also introduced so as to dilute the corresponding exhaust gas; a sampling pipe 2 one end of which is provided in the upstream-side dilution tunnel 3a so that a part of the diluted exhaust gas is sampled as a sample gas; and a downstream-side dilution tunnel 3b into which the exhaust gas sampled through the sampling pipe 2 is introduced so as to be diluted by mixture by a mixing part 3b1 such as, an orifice.

And the downstream side of the upstream-side dilution tunnel 3a is connected with a constant flow regulating device 8 for regulating the flow rate of the diluted exhaust gas to be constant. This constant flow regulating device 8 includes such as, a critical flow rate venturi and, a blower.

Further, the upstream side of the downstream-side dilution tunnel 3b is connected with a dilution air flow path 4 for supplying dilution air into the downstream-side dilution tunnel 3b. Also, the downstream side thereof is connected with a diluted sample gas flow path 5 through which the sample gas further diluted with the dilution air flows. Furthermore, there is provided an air discharge flow path 6 which is connected to the upstream side of the mixing part 3b1 in the downstream-side dilution tunnel 3b so as to discharge a part of the dilution air within the downstream-side dilution tunnel 3b. It is noted that the configurations of the dilution air flow path 4 and the diluted sample flow path 5 are similar to those in the embodiment described above.

And one end of the air discharge flow path 6 is connected to the upstream side of the mixing part 3b1 in the downstream-side dilution tunnel 3b and the other end thereof is connected to the upstream side than the constant flow regulating device 8 including a venturi and a pump (in specific, between the upstream-side dilution tunnel 3b and the constant flow regulating device 8). Moreover, similarly to the embodiment described above, the third suction pump P3 and the third flowmeter FM3 are provided on the air discharge flow path 6. In addition, a sampling line (not shown) for measuring an exhaust gas component is connected between a mixing part 3a1 in the upstream-side dilution tunnel 3a and the other end of the air discharge flow path 6. Thus, the suction pumps P1 to P3 and the flowmeters FM1 to FM3 provided on the respective flow paths are controlled by the analysis control unit 7 similarly to the embodiment described above. According to the exhaust gas sampling device 100 configured as described above, since the dilution air of the same flow rate as that of the sampled exhaust gas from the upstream-side dilution tunnel 3a through the sampling pipe 2 is returned to a side of the upstream-side dilution tunnel 3a, an influence of a flow rate error in the upstream-side dilution tunnel 3a can be reduced.

As the dilution air, although it is preferable to use air as in the embodiment described above, inert gas such as argon (Ar) gas can be also used other than the air.

In addition, it is needless to say that the present invention is not limited to the above embodiments and various modifications thereof can be made in a range without departing from the spirit thereof.

### Industrial Applicability

According to the present invention, it becomes possible to set a dilution rate of a sample gas without being restricted by the flow compensation ranges of the first flowmeter provided on the upstream side and the second flowmeter provided on the downstream side of the dilution tunnel and, in particular, it is possible to dilute the sample gas at a low dilution rate.

## Claims

1. An exhaust gas sampling device comprising:
a downstream-side dilution tunnel in which a part of exhaust gas flowing through an exhaust pipe or a part of diluted exhaust gas flowing through an upstream-side dilution tunnel is introduced as sample gas into a mixing part;
a dilution gas flow path connected to an upstream side of the downstream-side dilution tunnel so as to supply dilution gas to the downstream-side dilution tunnel, the dilution gas flow path including a first flowmeter for measuring a flow rate of the dilution gas;
a diluted sample gas flow path connected to the downstream side of the downstream-side dilution tunnel, the diluted sample gas flow path including a second flowmeter for measuring a flow rate of the diluted sample gas diluted with the dilution gas; and
a dilution gas discharge flow path connected to an upstream side of the mixing part in the downstream-side dilution tunnel so as to discharge a part of the dilution gas in the downstream-side dilution tunnel to outside, the dilution gas discharge flow path including a third flowmeter for measuring a flow rate of the dilution gas to be discharged.

2. The exhaust gas sampling device according to claim 1, wherein the dilution gas flow rate obtained by the first flowmeter is made identical to the diluted sample gas flow rate obtained by the second flowmeter so that the sample gas flow rate to be introduced to the downstream-side dilution tunnel is controlled by the discharge gas flow rate obtained by the third flowmeter.

3. The exhaust gas sampling device according to claim 1, wherein the downstream-side dilution tunnel is configured that the diluted exhaust gas flowing through the upstream-side dilution tunnel is introduced into the mixing part as the sample gas, wherein
the upstream-side dilution tunnel is configured that the exhaust gas and the dilution gas are introduced in the upstream side thereof and the downstream side thereof is connected with a constant flow regulating device for regulating the flow rate of the diluted exhaust gas to be constant, and wherein
the dilution gas discharge flow path is connected to an upstream side than the constant flow regulating device.
